(19) Europäisches Patentamt
European Patent Office
Office européen des brevets

(11) **EP 4 020 692 A1**

(12) **EUROPEAN PATENT APPLICATION**
published in accordance with Art. 153(4) EPC

(43) Date of publication:
**29.06.2022 Bulletin 2022/26**

(21) Application number: **20943015.6**

(22) Date of filing: **30.06.2020**

(51) International Patent Classification (IPC):
**H01M 50/289** (2021.01)

(52) Cooperative Patent Classification (CPC):
**H01M 50/289**

(86) International application number:
**PCT/CN2020/099509**

(87) International publication number:
**WO 2022/000328 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **YAN, Kun**
  **Ningde, Fujian 352100 (CN)**
• **DING, Yu**
  **Ningde, Fujian 352100 (CN)**
• **ZHANG, Yibo**
  **Ningde, Fujian 352100 (CN)**
• **HU, Qiaoshu**
  **Ningde, Fujian 352100 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE**

(57) An electrochemical apparatus includes a barrier, where the barrier is hermetically connected to an outer package, standalone chambers are formed at two sides of the barrier respectively, each chamber encapsulates an electrode assembly and an electrolyte, electrode assemblies in adjacent chambers are connected in series by tabs, and the barrier includes an ion insulating layer, water permeability of the barrier is less than or equal to $10^{-3}$ g/(day·m²·Pa)/3 mm, and sealing thickness T and sealing width W of a seal between the barrier and the outer package satisfy $0.01 \leq T/W \leq 0.05$. Based on the electrochemical apparatus, not only high voltage output can be achieved and a temperature rise of the electrochemical apparatus can be reduced, but also water resistance and environmental stability of the electrochemical apparatus can be improved.

FIG. 1

EP 4 020 692 A1

**Description**

**TECHNICAL FIELD**

The present invention relates to the electrochemistry field, and in particular, to an electrochemical apparatus and an electronic apparatus using such electrochemical apparatus.

**BACKGROUND**

In existing lithium-ion battery systems, the open circuit voltage of a battery hardly exceeds 5 V due to factors such as a limited voltage difference between a positive electrode material and a negative electrode material and a limited capability of an electrolytic solution in resisting oxidation and reduction.. However, in the actual use of batteries, there are many scenarios in which a voltage exceeding 5 V needs to be used, for example, electric vehicles (EV), power tools (PT), and energy storage systems (ESS). Even in the mobile phone market, in order to meet such needs as fast charging, it is also necessary to increase the open-circuit voltage of cells. Currently, a plurality of lithium-ion batteries are generally connected in series to increase the output voltage, but there are many problems with the plurality of lithium-ion batteries connected in series. For example, overall energy density (ED) of the lithium-ion batteries is low due to the capacity difference between individual lithium-ion batteries; wires for series connection and contact resistance introduce additional electronic resistance, which causes heating to waste energy and affects battery life; and a higher voltage requires more lithium-ion batteries, which increases the difficulty of battery management. In order to resolve the above problems, the concept of high output voltage battery is proposed, which realizes high-voltage output of a single lithium-ion battery by means of series connection inside the battery, thereby reducing the total heat production of the battery and reducing the temperature rise during use.

In the prior art, the technique of the series-connected batteries is to connect two batteries in series directly in the same packaging bag, without ionic insulation between the two series-connected electrode assemblies. If the battery voltage rises so that the electrolyte is decomposed under high voltage conditions, the battery will fail. In addition, an internal short circuit will occur between the two electrode assemblies due to the voltage difference of electrode plates, which will also cause the battery to fail. For the above reasons, the current solution proposed is only applicable to solid electrolyte batteries. However, mainstream lithium batteries are liquid electrolyte batteries. Therefore, the foregoing solution is hard to popularize.

**SUMMARY**

The objective of this application is to provide an electrochemical apparatus, which can not only achieve high voltage output, but also reduce a temperature rise of the electrochemical apparatus.

A first aspect of this application provides an electrochemical apparatus, including a barrier, where the barrier is hermetically connected to an outer package, standalone chambers are formed at two sides of the barrier respectively, each chamber encapsulates an electrode assembly and an electrolyte, electrode assemblies in adjacent chambers are connected in series by tabs, and the barrier includes an ion insulating layer; water permeability of the barrier is less than or equal to $10^{-3}$ g/(day·m$^2$·Pa)/3 mm; and sealing thickness T and sealing width W of a seal between the barrier and the outer package satisfy $0.01 \leq T/W \leq 0.05$.

In an embodiment of this application, the sealing width W ranges from 1 mm to 7 mm.

In an embodiment of this application, the chamber is a sealed chamber.

In an embodiment of this application, the ion insulating layer is made of at least one of a polymer material, a metal material, and a carbon material.

In an embodiment of this application, the polymer material includes at least one of polyethylene terephthalate, polybutylene terephthalate, polyethylene naphthalate, polyether ether ketone, polyimide, polyamide, polyethylene glycol, polyamide imide amine, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate ester, poly(vinylidene fluoride-hexafluoropropylene), poly(vinylidene fluoride-co-chlorotrifluoroethylene), silicone, vinylon, polypropylene, anhydride modified polypropylene, polyethylene, ethylene-acetic acid ethylene copolymer, ethylene-ethyl acrylate copolymer, ethylene-acrylic acid copolymer, ethylene-vinyl alcohol copolymer, polyvinyl chloride, polystyrene, polyether nitrile, polyurethane, polyphenylene ether, polyester, polysulfone, and non-crystalline $\alpha$-olefin copolymer and its derivatives. The metal material includes at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel, and compositions or alloys thereof. The carbon material includes at least one of carbon felt, carbon film, carbon black, acetylene black, fullerene, conductive graphite film, or graphene film.

In an embodiment of this application, the barrier further includes an encapsulating layer, where the encapsulating layer is disposed at a circumferential edge around a surface of the ion insulating layer or on the entire surface of the ion insulating layer, and a material of the encapsulating layer has a melting point ranging from 120°C to 160°C.

In an embodiment of this application, the encapsulating layer includes at least one of polypropylene, acid anhydride modified polypropylene, polyethylene, ethylene-vinyl acetate copolymer, ethylene-ethyl acrylate copolymer, ethylene-acrylic acid copolymer, ethylene-vinyl alcohol copolymer, polyvinyl chloride, polystyrene, polyether nitrile, polyurethane, polyamide, polyester, and amorphous $\alpha$-olefin copolymer and its derivatives.

In an embodiment of this application, thickness of the barrier ranges from 6 $\mu$m to 100 $\mu$m.

In an embodiment of this application, the ion insulating layer is a single-layer or multi-layer structure.

In an embodiment of this application, the electrochemical apparatus has at least one of the following characteristics:

(a) the water permeability of the barrier is less than or equal to $10^{-4}$ g/(day·m$^2$·Pa)/3 mm;
(b) thickness of the barrier ranges from 10 $\mu$m to 40 $\mu$m; and
(c) a material of the ion insulating layer has a melting point higher than or equal to 165°C.

In an embodiment of this application, a structure of the electrode assembly includes a winding structure or a laminated structure.

A second aspect of this application provides an electronic apparatus. The electronic apparatus includes the electrochemical apparatus according to the first aspect of this application.

In the electrochemical apparatus provided in this application, the barrier is hermetically connected to the outer package with standalone chambers formed at two sides of the barrier, and the electrode assemblies and electrolytes at the two sides of the barrier are completely separated, which guarantees normal operation of the electrode assemblies at the two sides. In addition, good sealing is conducive to improving safety of the electrochemical apparatus. Furthermore, the barrier has the characteristic of ion insulation. Therefore, high-voltage decomposition of the electrolyte and short circuit in the electrode assembly can be avoided. The electrode assemblies at the two sides of the barrier are connected in series, so that not only high voltage output of the electrochemical apparatus is achieved, but also total heat production by battery cells and a temperature rise during use are reduced. The water permeability of the barrier is limited to be less than or equal to $10^{-3}$ g/(day·m$^2$·Pa)/3 mm, and the sealing thickness T and sealing width W of the seal between the barrier and the outer package are limited to satisfy $0.01 \leq T/W \leq 0.05$, so that water resistance and environmental stability of a battery can be improved.

## BRIEF DESCRIPTION OF DRAWINGS

To describe the technical solutions in the embodiments of the present invention and in the prior art more clearly, the following briefly describes the accompanying drawings required for describing the embodiments and the prior art. Apparently, the accompanying drawings in the following description show merely some embodiments of the present invention, and a person of ordinary skill in the art may derive other embodiments from these accompanying drawings without creative efforts.

FIG. 1 is a schematic structural diagram of an electrochemical apparatus according to an embodiment of this application;
FIG. 2 is a schematic diagram of a cross-sectional structure of a barrier according to an embodiment of this application;
FIG. 3 is a schematic structural diagram of a barrier according to an embodiment of this application;
FIG. 4 is a schematic structural diagram of an electrochemical apparatus in Comparative Example 1;
FIG. 5 is a schematic structural diagram of an electrochemical apparatus in Comparative Example 2; and
FIG. 6 is a schematic structural diagram of an electrochemical apparatus in Comparative Example 3.

## DESCRIPTION OF EMBODIMENTS

To make the objectives, technical solutions, and advantages of the present invention more comprehensible, the following describes the present invention in detail with reference to embodiments and accompanying drawings. Apparently, the described embodiments are merely some but not all of the embodiments of the present invention.

The electrochemical apparatus of this application may be any electrochemical apparatus well known to those skilled in the art, such as a lithium-ion battery, a sodium-ion battery, a magnesium-ion battery, and a super capacitor. The following uses a lithium-ion battery as an example for description. Those skilled in the art should understand that the following description is merely for example purposes and does not limit the protection scope of this application.

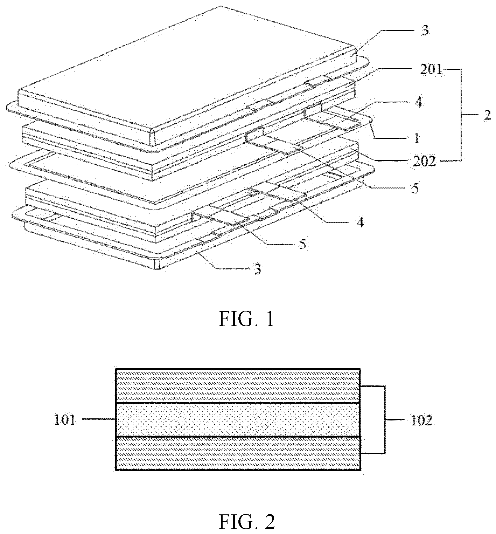

This application provides an electrochemical apparatus. A typical implementation is shown in FIG. 1. The electrochemical apparatus includes a barrier 1, where the barrier 1 is hermetically connected to an outer package 3, standalone chambers are formed at two sides of the barrier 1, each chamber encapsulates an electrode assembly 2 and an electrolyte, and adjacent electrode assemblies 2 are connected in series by tabs, which may be that a positive tab 4 of an electrode assembly 201 and a negative tab 5 of an electrode assembly 202 are connected in series, or that a negative tab 5 of an electrode assembly 201 and a negative tab 4 of an electrode assembly 202 are connected in series. The barrier 1 includes an ion insulating layer for ion insulation. The chamber is a sealed chamber.

In this application, water permeability of the barrier is less than or equal to $10^{-3}$ g/(day·m$^2$·Pa)/3 mm. Greater water permeability of the barrier allows water vapor in the environment to more easily penetrate into the battery through the barrier, resulting in an increase in water contained in a non-aqueous electrolyte, an increase in thickness of the battery, and a decrease in service life of the battery.

Sealing thickness T (in mm) and sealing width W (in mm) of a seal between the barrier and the outer package satisfy $0.01 \leq T/W \leq 0.05$. The ratio T/W falling within the foregoing range can ensure that the battery is well sealed, prolonging the service life of the battery. When T/W is too small, the sealing thickness may be insufficient so that a sealing effect is poor, making the battery less stable in the environment. For example, water vapor in the environment can easily penetrate into the battery, resulting in increased water contained in the battery, electrolyte decomposition, and shortened service life of the battery. When the ratio T/W is too large, the sealing width W may be too small and a sealing effect is also poor, making the battery less stable in the environment. For example, the water vapor in the environment can easily penetrate into the battery, resulting in increased water contained in the battery, electrolyte decomposition, and other problems, thereby reducing the service life of the battery. In this application, the sealing thickness and sealing width are not particularly limited provided that the purpose of the present invention can be achieved. For example, the sealing width preferably ranges from 1 mm to 7 mm. In this application, the sealing thickness is thickness of a sealing material in a sealing zone; and the sealing width is width of the sealing material in the sealing zone. The sealing zone is a zone at which the barrier and the outer package are sealed together. During the sealing, a polymer material in the inner layer of the outer package and a polymer material in the barrier are sealed together by hot pressure to form a sealing zone. Therefore, the sealing thickness includes thickness of the polymer material in the barrier and the polymer material in the inner layer of the outer package that are fused. The sealing width is width of the sealing zone formed after the polymer material in the barrier is hot pressed with the polymer material of the inner layer of the outer package. A direction of the sealing thickness is a stacking direction of the outer package and the barrier, and a direction of the sealing width is a distance between two sealing edges.

In some embodiments of this application, the barrier is hermetically connected to the outer package with standalone chambers formed at two sides of the barrier, and the electrode assemblies and electrolytes at the two sides of the barrier are completely separated, which guarantees normal operation of the electrode assemblies at the two sides. In addition, good sealing is conducive to improving safety and environmental stability of the electrochemical apparatus. Furthermore, the barrier has the characteristic of ion insulation. Therefore, high-voltage decomposition of the electrolyte and short circuit in the electrode assembly can be avoided. The electrode assemblies at the two sides of the barrier are connected in series, so that not only high voltage output of the electrochemical apparatus is achieved, but also total heat production by battery cells and a temperature rise during use are reduced. In addition, limiting the water permeability of the barrier to the foregoing range can more effectively avoid safety problems caused when the electrochemical apparatus is working in a high-humidity environment; and limiting the ratio of the sealing thickness T to the sealing width W to the foregoing range can more effectively achieve sealing of the electrochemical apparatus, thereby further improving the safety of the electrochemical apparatus.

The structure of the ion insulating layer is not particularly limited, provided that the purpose of the present invention can be achieved. For example, the ion insulating layer may have a single-layer structure or a multi-layer composite structure.

In some embodiments of this application, the ion insulating layer is made of at least one of a polymer material, a metal material, a carbon material, or a composite material thereof.

The polymer material is not particularly limited, and any material known to those skilled in the art may be used, provided that the purpose of the present invention can be achieved. For example, the polymer material may include at least one of polyethylene terephthalate, polybutylene terephthalate, polyethylene naphthalate, polyether ether ketone, polyimide, polyamide, polyethylene glycol, polyamide imide amine, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate ester, poly(vinylidene fluoride-hexafluoropropylene), poly(vinylidene fluoride-co-chlorotrifluoroethylene), silicone, vinylon, polypropylene, anhydride modified polypropylene, polyethylene, ethylene-acetic acid ethylene copolymer, ethylene-ethyl acrylate copolymer, ethylene-acrylic acid copolymer, ethylene-vinyl alcohol copolymer, polyvinyl chloride, polystyrene, polyether nitrile, polyurethane, polyphenylene ether, polyester, polysulfone, and non-crystalline $\alpha$-olefin copolymer and its derivatives.

The metal material is not particularly limited, and any material known to those skilled in the art may be used, provided that the purpose of the present invention can be achieved. For example, the metal material may include at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel, and compositions or alloys thereof. Preferably, a metal material with better oxidation-reduction resistance under the environment of a lithium-ion battery may be selected.

The carbon material includes at least one of carbon felt, carbon film, carbon black, acetylene black, fullerene, conductive graphite film, or graphene film. In some embodiments of this application, the ion insulating layer preferably uses a polymer material. Because the polymer material has low density, a weight of inactive substance can be reduced, thereby increasing mass energy density of the electrode assembly. In addition, the ion insulating layer using a polymer material can reduce a probability of generating debris under mechanical abuse (nail penetration, impact, extrusion, and the like), and provide a better wrapping effect on a mechanically damaged surface. Therefore, safety boundary under the condition of the above-mentioned mechanical abuse can be improved, and a pass rate of safety test can be increased.

In some embodiments of this application, the ion insulating layer is preferably made of a metal material, which has strong isolation reliability, better toughness and compactness than polymer materials, and thinner processing thickness. When the ion insulating layer preferably uses a carbon material film, a product with the ion insulating layer has excellent safety performance, especially excellent high-temperature reliability, and has the function of separating battery cells at two sides of the ion insulating layer when a main body of a battery cell is damaged.

In some embodiments of the present invention, the barrier further includes an encapsulating layer 102, and the encapsulating layer 102 may be disposed at two sides of the ion insulating layer 101, as shown in FIG. 2. The encapsulating layer 102 is used for hermetically connect the ion insulating layer 101 and the outer package. In other embodiments, the encapsulating layer 102 may alternatively be disposed on the outer package.

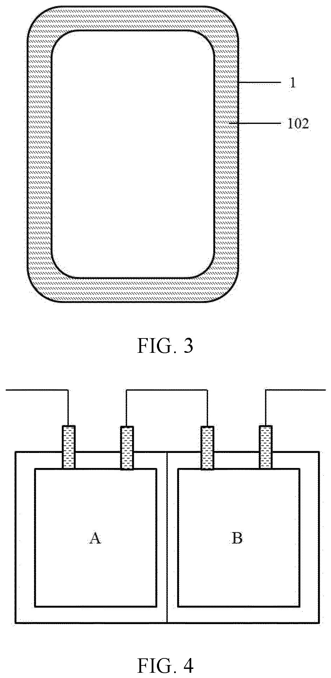

In some embodiments of this application, the encapsulating layer is disposed at a circumferential edge around a surface of the ion insulating layer or on the entire surface of the ion insulating layer. When the encapsulating layer is disposed at the circumferential edge around the surface of the ion insulating layer, width of the encapsulating layer is not particularly limited, provided that it is greater than the sealing width so as to ensure the required sealing width. As shown in FIG. 3, the encapsulating layer 102 is disposed at the circumferential edge around the surface of the ion insulating layer 101, which minimizes a coating amount and a proportion of the encapsulating layer, reduces a proportion of inactive substance, and thus can increase the energy density of the battery cell. The encapsulating layer being disposed on the entire surface of the ion insulating layer can effectively reduce the water permeability of the barrier, and when the electrochemical apparatus is working in a high air humidity environment, can more effectively avoid short circuit and even safety failure of the electrochemical apparatus due to water absorption of the barrier.

In some embodiments of this application, the encapsulating layer is disposed at the circumferential edge around the surface of the ion insulating layer, the ion insulating layer is made of a conductive material, and at least one of the electrode assemblies at the two sides of the barrier has a separator present on the outermost side adjacent to the barrier.

In some embodiments of this application, the encapsulating layer is disposed at the circumferential edge around the surface of the ion insulating layer, the ion insulating layer is made of an insulating material, and the electrode assemblies at the two sides of the barrier may each have one of a separator, a positive electrode current collector, a negative electrode current collector, a positive electrode active material, and a negative electrode active material present on the outermost side adjacent to the barrier.

In some embodiments of this application, the encapsulating layer is disposed on the entire surface of the ion insulating layer, the ion insulating layer is made of an insulating material, and the electrode assemblies at the two sides of the barrier may each have one of a separator, a positive electrode current collector, a negative electrode current collector, a positive electrode active material, and a negative electrode active material present on the outermost side adjacent to the barrier.

In this application, a material of the encapsulating layer is not particularly limited, and materials known to those skilled in the art can be used, provided that the purpose of the present invention can be achieved. For example, the material of the encapsulating layer includes at least one of polypropylene, acid anhydride modified polypropylene, polyethylene, ethylene-vinyl acetate copolymer, ethylene-ethyl acrylate copolymer, ethylene-acrylic acid copolymer, ethylene-vinyl alcohol copolymer, polyvinyl chloride, polystyrene, polyether nitrile, polyurethane, polyamide, polyester, and amorphous $\alpha$-olefin copolymer and its derivatives.

Certainly, when the encapsulating layer of the present invention covers the entire surface of the ion insulating layer, the encapsulating layer also has the function of ion insulation. In this application, for convenience, the barrier is divided into the ion insulating layer and the encapsulating layer, which does not mean that the encapsulating layer has no ion insulating properties. For example, when the encapsulating layer fully covers two sides of the ion insulating layer, the ion insulating layer and the encapsulating layer play a role of ion insulation together.

In some embodiments of this application, thickness of the barrier ranges from 6 $\mu$m to 100 $\mu$m. The barrier not only has the characteristic of ion insulation, but should also have some mechanical strength. Therefore, if the barrier is too thin so that the mechanical strength is poor, it is easy to cause damage and affect the performance and even the safety of the electrochemical apparatus. If the barrier is too thick, conduction of electrons is affected and the energy density of the electrochemical apparatus is reduced, which limits the performance of the electrochemical apparatus.

In the embodiments of this application, when the encapsulating layer is located only in the sealing zone, the thickness of the barrier is thickness of the ion insulating layer itself. When the encapsulating layer covers the entire ion insulation layer, the thickness of the barrier is a sum of thickness of the ion insulation layer and thicknesses of the encapsulating layers at the two sides of the ion insulation layer. The thickness of the encapsulating layers at the two sides of the ion insulating layer may be the same or different, provided that the purpose of the present invention can be achieved. For example, the thicknesses of the encapsulating layers at the two sides of the ion insulating layer are the same.

In some embodiments of this application, the electrochemical apparatus has at least one of the following characteristics:

(a) the water permeability of the barrier is less than or equal to $10^{-4}$ g/(day·m$^2$·Pa)/3 mm;
(b) thickness of the barrier ranges from 10 $\mu$m to 40 $\mu$m;
(c) a material of the encapsulating layer has a melting point ranging from 120°C to 160°C; and
(d) a material of the ion insulating layer has a melting point higher than or equal to 165°C.

In this application, the barrier is hermetically connected to the outer package, to be specific, the encapsulating layer of the barrier is hermetically connected to an inner layer of the outer package, so that the standalone sealed chambers are formed in the electrochemical apparatus, and ionic insulation is achieved between a plurality of electrode assemblies of a liquid electrolyte battery with series connection inside, avoiding potential safety hazards such as internal short circuit or high-voltage decomposition of the electrolyte, and improving the safety performance of the electrochemical apparatus. Therefore, limiting the melting point of the encapsulating material to the foregoing temperature is more conducive to achieving a hermetical connection between the barrier and the outer package.

In some embodiments of this application, a structure of the electrode assembly includes a winding structure or a laminated structure.

In some embodiments of this application, a structure of the electrode assembly is a winding structure, and the electrode assembly includes single tab or multiple tabs. The electrode assembly including single tab means one positive tab and one negative tab are respectively led out from a positive electrode plate and a negative electrode plate. The electrode assembly including multiple tabs means one positive tab and one negative tab may be led out from each circle of positive electrode plate and negative electrode plate respectively, or one positive tab and one negative tab may be led out from each two or more circles of positive electrode plate and negative electrode plate respectively, so that the electrode assembly of the winding structure finally includes a plurality of sets of positive tabs and negative tabs which are then connected to tab leads by welding.

In some embodiments of this application, the structure of the electrode assembly is a laminated structure, and the electrode assembly includes multiple tabs, meaning one positive tab and one negative tab may be led out from each layer of positive electrode plate and negative electrode plate respectively, so that the electrode assembly of the laminated structure finally includes a plurality of sets of positive tabs and negative tabs which are then connected to tab leads by welding.

In this application, the welding method is not particularly limited, provided that the purpose of this application can be achieved. For example, the welding may be laser welding, ultrasonic welding, or resistance welding.

The electrode assembly in this application may be an electrode assembly including a positive electrode plate, a negative electrode plate, and a separator, and the foregoing electrode assembly is used as an example for description. Those skilled in the art should understand that the following description is merely for example purposes and does not limit the protection scope of this application.

In this application, the positive electrode plate is not particularly limited, provided that the purpose of this application can be achieved. For example, the positive electrode plate typically includes a positive electrode current collector and a positive electrode active material. In this application, the positive electrode current collector is not particularly limited, and may be any positive electrode current collector known in the art, such as copper foil, aluminum foil, aluminum alloy foil, or a composite current collector. The positive electrode active material is not particularly limited, and may be any positive electrode active material in the prior art. For example, the positive electrode active material includes at least one of lithium nickel cobalt manganate, lithium nickel cobalt aluminate, lithium iron phosphate, lithium cobalt oxide, and lithium manganate, or lithium iron manganese phosphate. In this application, thicknesses of the positive electrode current collector and that of the positive electrode active material are not particularly limited, provided that the purpose of this application can be achieved. For example, the thickness of the positive electrode current collector ranges from 8 $\mu$m to 12 $\mu$m, and the thickness of the positive electrode active material ranges from 30 $\mu$m to 120 $\mu$m.

In some preferred embodiments of this application, the positive electrode plate may further include a conductive layer. The conductive layer is sandwiched between the positive electrode current collector and a positive electrode active material layer. Composition of the conductive layer is not particularly limited, and the conductive layer may be a conductive layer commonly used in the art. The conductive layer includes a conductive agent and a binder.

In some embodiments of this application, the negative electrode plate is not particularly limited, provided that the purpose of this application can be achieved. For example, the negative electrode plate typically includes a negative electrode current collector and a negative electrode active material. In this application, the negative electrode current collector is not particularly limited, and any negative electrode current collector known in the art may be used, for example, copper foil, aluminum foil, aluminum alloy foil, or a composite current collector. The negative electrode active material is not particularly limited, and any negative electrode active material known in the art may be used. For example, the negative electrode active material may include at least one of artificial graphite, natural graphite, mesophase carbon microsphere, silicon, silicon carbon, silicon oxygen compound, soft carbon, hard carbon, lithium titanateor niobium titanate. In this application, thicknesses of the negative electrode current collector and that of the negative electrode active material are not particularly limited, provided that the purpose of this application can be achieved. For example, the thickness of the negative electrode current collector ranges from 6 $\mu$m to 10 $\mu$m, and the thickness of the negative electrode active material ranges from 30 $\mu$m to 120 $\mu$m.

In some preferred embodiments of this application, the negative electrode plate may further include a conductive layer. The conductive layer is sandwiched between the negative electrode current collector and a negative electrode active material layer. Composition of the conductive layer is not particularly limited, and the conductive layer may be a conductive layer commonly used in the art. The conductive layer includes a conductive agent and a binder.

The conductive agent is not particularly limited, and any conductive agent known in the art can be used, provided that the purpose of this application can be achieved. For example, the conductive agent may include at least one of conductive carbon black (Super P), carbon nanotubes (CNTs), carbon nanofibers, graphene, or the like. The binder is not particularly limited, and any binder known in the art can be used, provided that the purpose of this application can be achieved. For example, the binder may include at least one of styrene butadiene rubber (SBR), polyvinyl alcohol (PVA), polytetrafluoroethylene ethylene (PTFE), sodium carboxymethyl cellulose (CMC-Na), or the like.

In some embodiments of this application, the separator in this application is not particularly limited, provided that the purpose of this application can be achieved. For example, thickness of the separator may range from 5 $\mu$m to 15 $\mu$m, the separator may include a polymer or an inorganic substance formed by a material stable to the electrolyte of this application.

For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, and polyimide. Optionally, a polypropylene porous membrane, a polyethylene porous membrane, polypropylene nonwoven fabric, polyethylene nonwoven fabric, or polypropylene-polyethylene-polypropylene porous composite membrane can be used. Optionally, a surface treatment layer is provided on at least one surface of the substrate layer, and the surface treatment layer may be a polymer layer or an inorganic substance layer, or a layer formed by a mixture of a polymer and an inorganic substance.

For example, the inorganic layer includes inorganic particles and a binder. The inorganic particles are not particularly limited, and may include, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be selected from, for example, a combination of one or more of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The tab in this application refers to a metal conductor led out from a positive electrode plate or a negative electrode plate, which is configured to be connected to other parts of the electrochemical apparatus in series or parallel. The positive tab is led out from the positive electrode plate, and the negative tab is led out from the negative electrode plate.

The electrolyte mentioned in this application may contain a lithium salt and a non-aqueous solvent. In this application, the lithium salt is not particularly limited, and any lithium salt known in the art can be used, provided that the purpose of this application can be achieved. For example, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, or $LiPO_2F_2$. For example, $LiPF_6$ can be selected as the lithium salt. In this application, the non-aqueous solvent is not particularly limited, provided that the purpose of this application can be achieved. For example, the non-aqueous solvent may include at least one of a carbonate compound, a carboxylate compound, an ether compound, a nitrile compound, or other organic solvents.

For example, the carbonate compound may include at least one of diethyl carbonate (DEC), dimethyl carbonate (DMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate.

In this application, the outer package is not particularly limited, provided that the purpose of this application can be achieved. For example, the outer package may include an inner layer and an outer layer, and the inner layer is hermetically connected to the barrier. Therefore, a material of the inner layer may include a polymer material to achieve a good sealing effect; and the combination of the inner layer and the outer layer can effectively protect the internal structure of the electrochemical apparatus. The material of the inner layer in this application is not particularly limited, provided that the purpose of the application can be achieved. For example, the material of the inner layer includes at least one of polypropylene, polyester, p-hydroxybenzaldehyde, polyamide, polyphenylene ether, polyurethane, or the like. In this application, a material of the outer layer is not particularly limited, provided that the purpose of the application can be achieved. For example, the material of the outer layer includes at least one of aluminum foil, aluminum oxide layer, silicon nitride layer, Ni, Cu, Ag, Al.

In this application, thickness of the outer package is not particularly limited, provided that the purpose of this application can be achieved. For example, the thickness of the outer package ranges from 60 $\mu$m to 200 $\mu$m, and the outer package of such thickness can effectively protect the internal structure of the electrochemical apparatus.

In this application, the hermetic connection method between the barrier and the outer package is not particularly limited, provided that the purpose of this application can be achieved. For example, the hermetic method may use hot pressing. In this application, the hot pressing condition is not particularly limited, provided that the purpose of the application can be achieved. For example, a hot pressing temperature ranges from 150°C to 220°C, and a hot pressing pressure ranges from 0.1 MPa to 0.6 MPa.

This application further provides an electronic apparatus, including the electrochemical apparatus provided in this application. The electronic apparatus in this application is not particularly limited, and may be any known electronic apparatus in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, a lithium-ion capacitor, or the like.

A method for preparing the electrochemical apparatus of this application is not particularly limited, and any method known in the art can be used. For example, this application may use the following preparation method:

(1) Preparation of the negative electrode plate: A negative electrode active material and a solvent are mixed to obtain a slurry which is stirred even. The slurry is evenly coated on the negative electrode plate and dried to obtain a single-sided coated negative electrode plate. Then, the foregoing steps are repeated on the other surface of the negative electrode plate to obtain a double-sided coated negative electrode plate. The negative electrode plate is then cut for later use. A coating thickness of the negative electrode active material on one surface is 70 $\mu$m.

(2) Preparation of the positive electrode plate: A positive electrode active material and a solvent are mixed to obtain a slurry which is stirred even. The slurry is evenly coated on the positive electrode plate and dried to obtain a single-sided coated positive electrode plate. Then, the foregoing steps are repeated on the other surface of the positive electrode plate to obtain a double-sided coated positive electrode plate. The positive electrode plate is then cut for later use. A coating thickness of the positive electrode active material on one surface is 65 $\mu$m.

(3) Preparation of the electrolyte: A lithium salt and a non-aqueous solvent are mixed and stirred even to obtain an electrolyte with a lithium salt concentration of 30%.

(4) Preparation of the electrode assembly: The negative electrode plate, the separator, and the positive electrode plate are stacked and fixed together for later use. Each electrode assembly included a positive tab and a negative tab; the foregoing steps are repeated to obtain a plurality of electrode assemblies; and the structure of the electrode assembly may be a winding structure or a laminated structure.

(5) Barrier: The barrier provided in this application may be used.

(6) Assembling of the electrode assembly: The outer package is placed in an assembly clamping, the electrode assembly and the separator are spaced apart, and the outer package is placed adjacent to the electrode assembly, and finally sealing is performed to complete assembling of the electrode assembly.

(7) Electrolyte injection and packaging: The electrolyte is separately injected into the two chambers of the installed electrode assembly, and all the tabs of the electrode assembly are led out of an aluminum plastic film for subsequent processing.

(8) Series connection: A positive tab of one electrode assembly and a negative tab of another electrode assembly are connected together through laser welding to realize series connection. Then assembling of the battery is completed.

The electrochemical apparatus provided in this application may include two electrode assemblies, or may include three or more electrode assemblies. For the preparation method of an electrochemical apparatus containing two electrode assemblies or three or more electrode assemblies, refer to the preparation method of the foregoing electrochemical apparatus.

The terms used in this application are generally commonly used by those skilled in the art. If any terms are inconsistent with the commonly used terms, the terms in this application shall prevail.

Specifically, in this application, the following terms have the following meanings.

Test method:

Water vapor permeability:

A film with a specific thickness (for example, 60 μm) was prepared. The film was placed on a clamping mechanism, and edges of the film were compressed tight by rubber with a high pressure. A constant temperature and humidity environment was created at one side A of the apparatus, and a probe of a water vapor mass spectrometer was disposed at the other side B, gas exchange between the two sides could be completed through only the film. In the test process, the film was first fixed, and the chamber B was evacuated to exhaust internal water vapor. The mass spectrometer was then turned on which continuously received the water vapor permeated from the chamber A and converted the water vapor into electrical signals for output. The foregoing test lasted for 24 hours or longer to obtain a total water permeation m during this period. The total permeation m was divided by time, water vapor partial pressure, permeation area, and film thickness to obtain the water vapor permeability in g/(day $M^2 \cdot Pa$)/3 mm.

0.1C discharge energy density:

The electrochemical apparatus was left standing for 30 minutes at a room temperature, charged to a voltage of 4.4 V (rated voltage) at a constant current charging rate of 0.05C, and then the electrochemical apparatus was discharged to 3.0 V at a rate of 0.05C. The foregoing charging/discharging steps were repeated for three cycles to complete the formation of the electrochemical apparatus to be tested. After the formation of the electrochemical apparatus was completed, the electrochemical apparatus was charged to a voltage of 4.4 V at a constant current rate of 0.1C, then discharged 3.0 V at a discharge rate of 0.1C. A discharge capacity of the electrochemical apparatus was recorded, and then energy density of the electrochemical apparatus at a discharge rate of 0.1C was calculated:

$$\text{Energy density (Wh/L)} = \text{discharge capacity (Wh)/electrochemical}$$

$$\text{apparatus volume size (L)}$$

Sealing intensity between the barrier and the outer package:

After the barrier and the outer package were sealed, a flat part was taken and cut into samples with a width of 8 mm. The barrier at one end of the sample was clamped with one clamp of a tension meter, and the other end was clamped with the other clamp of the tension meter. The sample was drawn toward two opposite sides at a stretching speed of 20 mm/min until the barrier was completely separated from a sealing tape. The peak value in this process was record as a tensile strength value.

Thickness growth rate of the electrochemical apparatus after storage at 65°C_90%RH for 7 days:

The battery cell was charged to 4.45 V at a constant current of 1.0C, and then charged at a constant voltage until the current dropped to 0.05C. Charging was stopped. The battery cell was left standing for 1 hour and then was removed. An initial thickness T1 of the battery cell was measured. The battery cell was placed in an environment of 65°C_90%RH for seven days, its thickness T2 was tested and compared with its initial thickness in storage to find its thickness growth, where the growth rate was (T2-T1)/T1 × 100%.

Self-discharge rate K at a 7.6 V voltage platform:

The lithium-ion battery was discharged to 6.0 V at a current of 0.5C (for a battery with series connection inside) and left standing for 5 minutes. Then the lithium-ion battery was charged to 7.6 V at a constant current of 0.5C, then charged at a constant voltage of 7.6 V until the current was 0.05C, and left standing in an environment of 25°C±3°C for two days. The voltage OCV1 at this time was tested and recorded. Next, the lithium-ion battery was continuously left standing in an environment of 25°C±3°C for two days, the voltage OCV2 at this time was tested and recorded, to obtain the value K by using the following equation:

$$K(mV/h)=(OCV2-OCV1)/48\ h\times1000.$$

**Nail penetration test:**

The electrochemical apparatus to be tested was charged to a voltage of 4.45 V (rated voltage in Comparative Example 1) or 8.90 V (in other Comparative Examples and all Examples) at a constant current rate of 0.05C, and then charged to a current of 0.025C (cutoff current) at a constant voltage, to make the battery reach a fully charged state. The appearance of the electrochemical apparatus before the test was recorded. Nail penetration test was performed on the electrochemical apparatus in an environment of 25±3°C. The diameter of the steel nail was 4 mm, the penetration speed was 30 mm/s, and the nail penetration positions were 15 mm from an edge of the electrode assembly at the positive tab and 15 mm from an edge of the electrode assembly at the negative tab. After the test was carried out for 3.5 minutes or the temperature of the surface of the electrode assembly dropped to 50°C, the test was stopped. With 10 battery cells as one group, the battery status was observed during the test. The pass criterion was that the battery did not burn or explode.

**Discharge temperature rise:**

The test temperature was 25°C. A temperature probe was attached to the center of the surface of the batter cell, the temperature of the main body of the battery cell was monitored, and foam was wrapped on the surface of the battery cell to weaken the heat exchange between the battery cell and the contacts. The test process was as follows: The battery cell was discharged to 6 V (6 V for a battery cell with series connection) or 3 V (3 V for a single battery cell in Comparative Examples, with the same applying hereinafter) at a constant current of 0.2C, then charged to 8.4 V or 4.2 V at a constant current of 0.5C, charged to 8.9 V or 4.45 V at 0.2C, and left standing for 120 min until the temperature at the center of the battery cell dropped to 25°C at the room temperature. The same power 15 W was used for discharge, and the temperature rise of the main body of the battery cell was monitored during the discharge process.

**Example 1**

(1) Preparation of negative electrode plate: Artificial graphite, conductive carbon black (Super P), styrene butadiene rubber (SBR) were mixed at a weight ratio of 96:1.5:2.5, with deionized water added as a solvent, to prepare a slurry with a solid content of 70wt% which was stirred even. The slurry was uniformly coated on a surface of an aluminum foil negative electrode current collector with a thickness of 10 $\mu$m and dried at 110°C to obtain a negative electrode plate coated with a negative electrode active material layer on one side with a coating layer thickness of 150 $\mu$m. The foregoing steps were repeated on the other surface of the negative electrode plate to obtain a negative electrode plate coated with a negative electrode active material layer on both surfaces. Then the negative electrode plate was cut into pieces of a size of 41 mm×61 mm for use.

(2) Preparation of positive electrode plate: The positive electrode active material lithium cobalt oxide ($LiCoO_2$), conductive carbon black (Super P), and polyvinylidene fluoride (PVDF) were mixed at a weight ratio of 97.5:1.0:1.5, with N-methylpyrrolidone (NMP) added as a solvent, to prepare a slurry with a solid content of 75wt% which was stirred even. The slurry was uniformly applied on a surface of an aluminum foil positive electrode current collector with a thickness of 12 $\mu$m and dried at 90°C to obtain a positive electrode plate coated with a negative electrode active material layer thickness of 100 $\mu$m. The foregoing steps were repeated on the other surface of the aluminum foil positive electrode plate to obtain a positive electrode plate coated with a positive electrode active material layer on both surfaces. The positive electrode plate was cut into pieces of a size of 38 mm×58 mm for use.

(3) Preparation of electrolyte: In a dry argon atmosphere, organic solvents ethylene carbonate (EC), ethyl methyl carbonate (EMC), and diethyl carbonate (DEC) were mixed at a mass ratio of EC:EMC:DEC=30:50:20, and then a lithium salt lithium hexafluorophosphate ($LiPF_6$) was added to and dissolved in the organic solvents and mixed uniformly to obtain an electrolyte with a lithium salt concentration of 1.15 mol/L.

(4) Preparation of electrode assembly A and electrode assembly B: A separator, a double-sided coated negative electrode plate, a separator, and a double-sided coated positive electrode plate were stacked in sequence to form a laminate, and then four corners of the laminate structure were fixed for later use. Each electrode assembly included one positive tab and one negative tab, and a polyethylene (PE) film with a thickness of 15 $\mu$m was selected as the separator.

(5) Barrier: The thickness of the barrier was 30 $\mu$m, with a PP material with a melting point of 165°C and a thickness of 10 $\mu$m selected as the ion insulating layer, and a PP material with a melting point of 140°C and a thickness of 10 $\mu$m selected as the encapsulating layer at each of the two sides, where the water vapor permeability of the barrier was $3\times10^{-4}$ g/(day·m$^2$·Pa)/3 mm.

(6) Assembling of electrode assembly A: An aluminum plastic film 1 formed by punching a pit was placed in the assembly clamping with the pit side facing up, the electrode assembly A was placed in the pit with the separator side facing up, then the barrier was placed on the electrode assembly A, with the edges aligned, and an external force was applied to compress them tight to obtain an assembled semi-finished product.

(7) Assembling of electrode assembly B: The assembled semi-finished product was placed in the assembly clamping with the barrier side facing up, the electrode assembly B was placed with the separator side facing down, then the electrode assembly B was placed on the barrier, with the edges aligned, an external force was applied to compress them tight, and then the electrode assembly B was covered with another aluminum plastic film formed by punching a pit with the pit side facing down, and the surrounding zones were heat-sealed by hot pressing to obtain the assembled electrode assembly. The hot pressing temperature was 185°C, the hot pressing pressure was 0.5 Mpa, the width of the sealing zone was 2 mm, a sealing thickness with a packaging bag was 0.3 mm, and the thickness of the polymer layer in the sealing zone was approximately 0.04 mm.

(8) Electrolyte injection and packaging: The electrolyte was separately injected into the two chambers of the assembled electrode assembly, and all tabs of electrode assemblies A and B were led out of the aluminum plastic film.

(9) Series connection: A positive tab of electrode assembly A and a negative tab of electrode assembly B were connected together through laser welding to realize a series connection. Assembling of the battery was completed.

**Example 2**

The ion insulating layer was Ti metal foil with a thickness of 10 $\mu$m, and the rest were the same as those in Example 1.

**Example 3**

The ion insulating layer was SUS metal foil with a thickness of 10 $\mu$m, and the rest were the same as those in Example 1.

**Example 4**

The ion insulating layer was PI metal foil with a thickness of 10 $\mu$m, and the rest were the same as those in Example 1.

**Example 5**

The thickness of the barrier was 6 $\mu$m, the ion insulating layer was Ti metal foil with a thickness of 6 $\mu$m, provided at surrounding edges of the ion insulating layer were an encapsulating layer with a thickness of 10 $\mu$m and a width of 2 mm, the encapsulating layer was made of PP and had a melting point of 140°C, and the rest were the same as those in Example 1.

**Example 6**

The thickness of the barrier was 100 $\mu$m, the thickness of the ion insulating layer was 80 $\mu$m, the thickness of the encapsulating layer at each of two sides was 10 $\mu$m, and the rest were the same as those in Example 1.

**Example 7**

The thickness of the barrier was 15 $\mu$m, the thickness of the ion insulating layer was 15 $\mu$m, provided at surrounding edges of the ion insulating layer were an encapsulating layer with a thickness of 10 $\mu$m and a width of 2 mm, the encapsulating layer was made of PP and had a melting point of 140°C, and the rest were the same as those in Example 1.

**Example 8**

The preparation steps (1) to (3) were the same as those in Example 1.

(4) Preparation of electrode assembly A and electrode assembly B: A double-sided coated negative electrode plate, a separator, and a single-sided coated positive electrode plate were stacked in sequence to form a laminate, with the uncoated surface of the positive electrode plate facing outwards, and then four corners of the laminate structure were fixed for later use. Each electrode assembly included one positive tab and one negative tab, and a polyethylene (PE) film with a thickness of 15 μm was selected as the separator.

(5) Barrier: The thickness of the barrier was 50 μm, with a PP material with a melting point of 165°C and a thickness of 15 μm selected as the ion insulating layer, and a PP material with a melting point of 140°C and a thickness of 10 μm selected as the encapsulating layer at each side, where the water vapor permeability of the barrier was $3 \times 10^{-4}$ g/(day·m²·Pa)/3 mm.

(6) Assembling of electrode assembly A: An aluminum plastic film formed by punching a pit was placed in the assembly clamping with the pit side facing up, the electrode assembly A was placed in the pit with the uncoated surface of the positive electrode plate facing up, then the barrier was placed on the electrode assembly A, with the edges aligned, and an external force was applied to compress them tight to obtain an assembled semi-finished product.

(7) Assembling of electrode assembly B: The assembled semi-finished product was placed in the assembly clamping with the barrier side facing up, the electrode assembly B was placed on the barrier with the separator side facing down, and with the edges aligned, an external force was applied to compress them tight, and then the electrode assembly B was covered with the aluminum plastic film formed by punching a pit with the pit side facing down, and the surrounding zones were heat-sealed by hot pressing to obtain the assembled electrode assembly. The hot pressing temperature was 185°C, the hot pressing pressure was 0.5 MPa, the width of the sealing zone was 2 mm, the sealing thickness with a packaging bag was 0.3 mm, and the thickness of the polymer layer in a sealing zone was approximately 0.04 mm.

(8) Electrolyte injection and packaging: The electrolyte was separately injected into the two chambers of the assembled electrode assembly, and all tabs of electrode assemblies A and B were led out of the aluminum plastic film.

(9) Series connection: A positive tab of electrode assembly A and a negative tab of electrode assembly B were connected together through laser welding to realize a series connection. Assembling of the battery was completed.

**Example 9**

The preparation steps (1) to (3) were the same as those in Example 1.

(4) Preparation of electrode assembly A and electrode assembly B: A double-sided coated negative electrode plate, a separator, and a single-sided coated positive electrode plate were stacked in sequence to form a laminate, with the uncoated surface of the positive electrode plate facing outwards, and then four corners of the laminate structure were fixed for later use. Each electrode assembly included one positive tab and one negative tab, and a polyethylene (PE) film with a thickness of 15 μm was selected as the separator.

(5) Barrier: The thickness of the barrier was 30 μm, with a PP material with a melting point of 165°C and a thickness of 10 μm selected as an intermediate layer and a PP material with a melting point of 140°C and a thickness of 10 μm selected as the encapsulating layer at each of the two sides, where the water vapor permeability of the barrier was $3 \times 10^{-4}$ g/(day·m²·Pa)/3 mm.

(6) Assembling of electrode assembly A: An aluminum plastic film formed by punching a pit was placed in the assembly clamping with the pit side facing up, the electrode assembly A was placed in the pit with the uncoated surface of the positive electrode plate facing up, then the barrier was placed on the electrode assembly A, with the edges aligned, and an external force was applied to compress them tight to obtain an assembled semi-finished product.

(7) Assembling of electrode assembly B: The assembled semi-finished product was placed in the assembly clamping with the barrier side facing up, the electrode assembly B was placed on the barrier with the uncoated surface of the positive electrode plate side facing down, and with the edges aligned, an external force was applied to compress, and then the electrode assembly B was covered with the aluminum plastic film formed by punching a pit with the pit side facing down, and the surrounding zones were heat-sealed by hot pressing to obtain the assembled electrode assembly. The hot pressing temperature was 185°C, the hot pressing pressure was 0.5 Mpa, the width of the sealing zone was 2 mm, the sealing thickness with a packaging bag was 0.3 mm, and the thickness of the polymer layer in a sealing zone was 0.04 mm.

The preparation steps (8) and (9) were the same as those in Example 1.

### Example 10

The ion insulating layer was Ti metal foil with a thickness of 10 $\mu$m, a PP material with a melting point of 140°C and a thickness of 10 $\mu$m was selected as the encapsulating layer at each of the two sides, and the rest were the same as those in Example 8.

### Example 11

The ion insulating layer was Ti metal foil with a thickness of 10 $\mu$m, a PP material with a melting point of 140°C and a thickness of 10 $\mu$m was selected as the encapsulating layer at each of the two sides, and the rest were the same as those in Example 9.

### Example 12

An acid anhydride modified PP with a melting point of 130°C was selected as the encapsulating layer, and the water vapor permeability of the barrier was $8 \times 10^{-5}$ g/(day·m$^2$·Pa)/3 mm, and the rest were the same as those in Example 1.

### Example 13

The thickness of the sealing zone was 0.1 mm, the width of the sealing zone was 2 mm, and the rest were the same as those in Example 1.

### Example 14

The thickness of the sealing zone was 0.05 mm, the width of the sealing zone was 2 mm, and the rest were the same as those in Example 1.

### Example 15

The preparation steps (1) to (4) were the same as those in Example 1.

(5) Preparation of electrode assembly C: A separator, a double-sided coated negative electrode plate, a separator, and a double-sided coated positive electrode plate were stacked in sequence to form a laminate, and then four corners of the laminate structure were fixed for later use. The electrode assembly C included one positive tab and one negative tab, and a polyethylene (PE) film with a thickness of 15 $\mu$m was selected as the separator.

(6) Selection of barrier A and barrier B: The thickness of the barrier was 30 $\mu$m, with a PP material with a melting point of 165°C and a thickness of 10 $\mu$m selected as the ion insulating layer and a PP material with a melting point of 140°C and a thickness of 10 $\mu$m selected as the encapsulating layer at each side, where the water vapor permeability of the barrier was $3 \times 10^{-4}$ g/(day·m$^2$·Pa)/3 mm.

(7) Assembling of electrode assembly A: An aluminum plastic film formed by punching a pit was placed in the assembly clamping with the pit side facing up, the electrode assembly A was placed in the pit with the separator side facing up, then the barrier was placed on the electrode assembly A, with the edges aligned, and an external force was applied to compress them tight to obtain an assembled semi-finished product.

(8) Assembling of electrode assembly B: The assembled semi-finished product in step (7) was placed in the assembly clamping with the barrier A facing up, the electrode assembly B was placed on the barrier A with the separator side facing down, then the barrier B was placed on the electrode assembly B with the edges aligned, and an external force was applied to compress them tight to obtain an assembled semi-finished product.

(9) Assembling of electrode assembly C: The assembled semi-finished product in step (8) was placed in the assembly clamping with the barrier B facing up, the electrode assembly C was placed on the barrier B with the separator side facing down, and with the edges aligned, an external force was applied to compress them tight, and then the electrode assembly C was covered with the aluminum plastic film formed by punching a pit with the pit side facing down, and the surrounding zones were heat-sealed by hot pressing to obtain the assembled electrode assembly. The hot pressing temperature was 185°C, the hot pressing pressure was 0.5 MPa, the width of the sealing zone was 2 mm, the sealing thickness with a packaging bag was 0.27 mm, and the thickness of the polymer layer in a sealing zone was approximately 0.05 mm.

(10) Electrolyte injection and packaging: The electrolyte was separately injected into the two chambers of the assembled electrode assembly, and all the tabs of the electrode assemblies A, B, and C were led out of an aluminum plastic film for subsequent processing.

(11) Series connection: A positive tab of electrode assembly A and a negative tab of electrode assembly B were welded together by laser welding to realize a series connection of the electrochemical apparatus containing electrode assemblies A and B, a positive tab of electrode assembly B and a negative tab of electrode assembly C were welded together through laser welding to realize a series connection of the electrochemical apparatus containing electrode assemblies B and C. Assembling of the battery was completed.

**Example 16**

Except that the barrier A and the barrier B were the same as those in Example 2, the rest were the same as those in Example 15.

**Example 17**

The ion insulating layer was a carbon film, the thickness of the ion insulating layer was 20 $\mu$m, provided at surrounding edges of the ion insulating layer were an encapsulating layer with a thickness of 10 $\mu$m and a width of 2 mm, the encapsulating layer was made of PP and had a melting point of 140°C, and the rest were the same as those in Example 1.

**Example 18**

The ion insulating layer was a graphene film, the thickness of the ion insulating layer was 20 $\mu$m, provided at surrounding edges of the ion insulating layer were an encapsulating layer with a thickness of 10 $\mu$m and a width of 2 mm, the encapsulating layer was made of PP and had a melting point of 140°C, and the rest were the same as those in Example 1.

**Example 19**

Polyphenyl ether with a melting point of 120°C was selected as the encapsulating layer, and the water vapor permeability of the barrier was $2.5\times10^{-4}$ g/(day·m$^2$·Pa)/3 mm, and the rest were the same as those in Example 1.

**Example 20**

(1) Preparation of negative electrode plate: The negative electrode plate was cut into pieces of a size of 41 mm×550 mm for use, and the rest were the same as those in Example 1.

(2) Preparation of positive electrode plate: The positive electrode plate was cut into pieces of a size of 35 mm×547 mm for use, and the rest were the same as those in Example 1.

(3) Preparation of electrolyte: In a dry argon atmosphere, organic solvents ethylene carbonate (EC), ethyl methyl carbonate (EMC), and diethyl carbonate (DEC) were mixed at a mass ratio of EC:EMC:DEC=30:50:20, and then a lithium salt lithium hexafluorophosphate (LiPF$_6$) was added to and dissolved in the organic solvents and mixed uniformly to obtain an electrolyte with a lithium salt concentration of 1.15 mol/L.

(4) Preparation of electrode assembly A and electrode assembly B: A separator, a double-sided coated negative electrode plate, a separator, a double-sided coated positive electrode plate were stacked, then winding was started from one end, the stacked product was finally rolled into a jelly roll with the negative electrode plate placed on the outermost side. Each electrode assembly included one positive tab and one negative tab, and a polyethylene (PE) film with a thickness of 15 $\mu$m was selected as the separator.

(5) Barrier: The thickness of the barrier was 30 $\mu$m, and a PP material with a melting point of 165°C and a thickness of 10 $\mu$m was selected as an intermediate layer. A PP material with a melting point of 140°C and a thickness of 10 $\mu$m was selected as the encapsulating layer at each of the two sides. The water vapor permeability of the barrier was $3\times10^{-4}$ g/(day·m$^2$·Pa)/3 mm.

(6) Assembling of electrode assembly A: An aluminum plastic film 1 formed by punching a pit was placed in the assembly clamping 1 with the pit side facing up, the electrode assembly A was placed in the pit, then the barrier was placed on the electrode assembly A, and an external force was applied to compress them tight to obtain an assembled semi-finished product.

(7) Assembling of electrode assembly B: The assembled semi-finished product was placed in the assembly clamping 2 with the barrier facing up, the electrode assembly B was placed on the barrier, an external force was applied to compress them tight, and then the electrode assembly B was covered with the aluminum plastic film 2 formed by punching a pit with the pit side facing down, and the surrounding zones were heat-sealed by hot pressing to obtain the assembled electrode assembly. The hot pressing temperature was 185°C, the hot pressing pressure was 0.5 MPa, the width of the sealing zone was 2 mm, the sealing thickness with a packaging bag was 0.27 mm, and the thickness of the polymer layer in a sealing zone was approximately 0.05 mm.

(8) Electrolyte injection and packaging: The electrolyte was separately injected into the two chambers of the assembled electrode assembly, and all tabs of electrode assemblies A and B were led out of the aluminum plastic film.

(9) Series connection of the electrode assembly: A positive tab of electrode assembly A and a negative tab of electrode assembly B were connected together through laser welding to realize a series connection of the electrode assemblies A and B. Assembling of the battery was completed.

## Example 21

Except that a thickness of a polymer sealing zone in the sealing zone was 20 $\mu$m and the width of the sealing zone was 2 mm, the rest were the same as those in Example 1.

## Comparative Example 1

The preparation steps (1) to (3) were the same as those in Example 1.

(4) Preparation of electrode assembly A and electrode assembly B: A double-sided coated negative electrode plate, a separator, and a double-sided coated positive electrode plate were stacked in sequence to form a laminate, and then four corners of the laminate structure were fixed for later use. Each electrode assembly included one positive tab and one negative tab. A polyethylene (PE) film with a thickness of 15 $\mu$m was selected as the separator.

(5) Electrolyte injection and packaging: The electrode assemblies A and B were packaged with aluminum foil, and then the package was sealed all around. The electrolyte was separately injected into the sealed chambers in which the electrode assemblies A and B were located, to which formation (charge to 3.3 V at a constant current of 0.02C, then charge to 3.6 V at a constant current of 0.1C) was performed, and then all tabs of electrode assemblies A and B were led out of the aluminum plastic film.

(6) Series connection: A positive tab of electrode assembly A and a negative tab of electrode assembly B were connected together through laser welding to realize a series connection. Assembling of the battery was completed, with a schematic diagram of the structure shown in FIG. 4.

## Comparative Example 2

The preparation steps (1) to (4) were the same as those in Comparative Example 1.

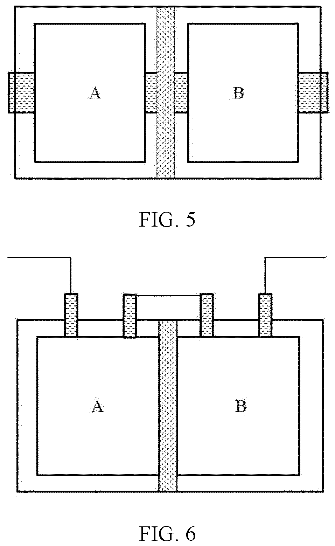

(5) Packaging, electrolyte injection, and connection: The tabs of the electrode assemblies A and B were respectively led out in a length direction of the electrode assembly, located on two sides of each of the electrode assemblies, and the positive tabs were coated with sealant. A negative tab of electrode assembly A and a positive tab of electrode assembly B were connected together through laser welding to realize a series connection of the electrode assemblies A and B. After the series connection was completed, the electrode assemblies A and B were packed in the imitated aluminum plastic film. At packaging, except that the top side of the contour was not sealed, and the electrode assemblies A and B were sealed in a width direction of the electrode assemblies at the sealant of the positive electrodes of the electrode assemblies A and B, so that the electrode assemblies A and B were in the standalone sealed chambers, and the electrolyte was injected separately. After packaging, the positive tabs were led out at one side in the length direction of the electrode assemblies A and B, and the negative tabs were led out at the other side. Assembling of the battery was completed, with a schematic diagram of the structure shown in FIG. 5.

## Comparative Example 3

The preparation steps (1) to (4) were the same as those in Comparative Example 1.

(5) Assembling of electrode assembly A: The electrode assembly A was placed into the pit of the aluminum plastic film formed by punching a pit, and the electrode assembly A was in contact with and aligned with the left side of the aluminum plastic film, then the other half of the aluminum plastic film was covered, and the side of the electrode assembly A was compressed. Glue was applied to the aluminum plastic film corresponding to the position on the right side of the electrode assembly A, and the upper and lower aluminum plastic films were compressed for consolidation forming.

(6) Assembling of electrode assembly B: In the semi-finished product in step (5), the electrode assembly B was placed in an idle zone on the right side of electrode assembly A, the left side of electrode assembly B was in contact with and aligned with the glue coated zone, the top of the entire aluminum plastic film was packaged through hot pressing, the top packaging was perpendicular to the glue coated zone, and the two were contacted, with a contact position sealed, so that the electrode assemblies A and B were respectively in the standalone sealed chambers.

(7) Electrolyte injection and packaging: The electrolyte was separately injected into the two sealed chambers in which the assembled electrode assemblies A and B were located, the aluminum plastic film was heat-pressed and sealed at the injection, and all the tabs of the electrode assemblies A and B were led out of the aluminum plastic film for subsequent processing.

(8) Series connection: A positive tab of electrode assembly A and a negative tab of electrode assembly B were connected together through laser welding to realize a series connection. Assembling of the battery was completed, with a schematic diagram of the structure shown in FIG. 6.

**Comparative Example 4**

The preparation steps (1) to (4) were the same as those in Comparative Example 1.

(5) Assembling of electrode assembly: A packaging film (aluminum plastic film with a thickness of approximately 90 $\mu$m) formed by punching a pit was placed in the assembly clamping with the pit side facing up, the electrode assembly A was placed in the pit, and the electrode assembly B was placed on the top of the electrode assembly A and compressed tightly. Then, the electrode assembly B was covered with another packaging film with the pit facing down, and peripheral sides were heat-sealed.

The rest were the same as those in Comparative Example 1.

**Comparative Example 5**

The preparation steps (1) to (3) were the same as those in Comparative Example 1.

(4) Electrolyte injection and packaging: All electrode plates and films in the electrode assembly A and the electrode assembly B in Comparative Example 1 were stacked into one electrode assembly, which was then placed in the outer package, with an injection opening left for sealing and one positive tab and one negative tab led out. After injection, the injection opening was sealed to form a lithium-ion battery without series connection.

**Comparative Example 6**

Except that a thickness of a polymer sealing zone in the sealing zone was 120 $\mu$m and the width of the sealing zone was 2 mm, the rest were the same as those in Example 1.

**Comparative Example** 7

Except that a thickness of a polymer sealing zone in the sealing zone was 16 $\mu$m and the width of the sealing zone was 2 mm, the rest were the same as those in Example 1.

**Comparative Example 8**

Except that a thickness of a polymer sealing zone in the sealing zone was 40 $\mu$m and the width of the sealing zone was 5 mm, the rest were the same as those in Example 1.

**Comparative Example 9**

Except that the water vapor permeability of the barrier was $1.7 \times 10^{-2}$ g/(day·m$^2$·Pa)/3 mm, the rest were the same as those in Example 1.

For details about data and test results of Examples and Comparative Examples, see Table 1.

**Table 1**

| | Ion insulating layer | Thickness of barrier (μm) | Finishing material of electrode assembly A | Finishing material of electrode assembly B | Encapsulating layer | Water vapor permeability of barrier (g/(day·m²·Pa)/3 mm) | Ratio of thickness of polymer layer in sealing zone to sealing width | Number of cells in series connection | 0.1C discharge energy density (Wh/L) | Sealing intensity of barrier and package bag (N/8 mm) | Temperature rise test (°C) | Thickness growth rate of battery cell at 65°C 90% RH after storage for 7 days (%) | Self-discharge rate at a 7.6 V voltage platform (mV/h) | Result of nail penetration test |
|---|---|---|---|---|---|---|---|---|---|---|---|---|---|---|
| Example 1 | PP | 30 | Separator | Separator | PP | $3 \times 10^{-4}$ | 0.020 | 2 | 589 | 29.0 | 25 | 6.5% | 0.03 | 8 out of 10 passed |
| Example 2 | Ti metal foil | 30 | Separator | Separator | PP | $3 \times 10^{-4}$ | 0.020 | 2 | 589 | 22.0 | 22 | 6.7% | 0.03 | 6 out of 10 passed |
| Example 3 | SUS | 30 | Separator | Separator | PP | $3 \times 10^{-4}$ | 0.020 | 2 | 589 | 32.0 | 21 | 7.2% | 0.03 | 5 out of 10 passed |
| Example 4 | PE with embedded conductive carbon fiber film | 30 | Separator | Separator | PP | $3 \times 10^{-4}$ | 0.020 | 2 | 589 | 32.0 | 27 | 7.2% | 0.03 | 8 out of 10 passed |
| Example 5 | Ti metal foil | 6 | Separator | Separator | PP | $3 \times 10^{-4}$ | 0.020 | 2 | 591 | 27.0 | 19 | 6.5% | 0.04 | 6 out of 10 passed |
| Example 6 | PP | 100 | Separator | Separator | PP | $3 \times 10^{-4}$ | 0.020 | 2 | 579 | 37.0 | 28 | 8.9% | 0.03 | 8 out of 10 passed |

| | Ion insulating layer | Thickness of barrier (μm) | Finishing material of electrode assembly A | Finishing material of electrode assembly B | Encapsulating layer | Water vapor permeability of barrier (g/(day·m²·Pa)/3 mm) | Ratio of thickness of polymer layer in sealing zone to sealing width | Number of cells in series connection | 0.1C discharge energy density (Wh/L) | Sealing intensity of barrier and package bag (N/8 mm) | Temperature rise test (°C) | Thickness growth rate of battery cell at 65°C 90% RH after storage for 7 days (%) | Self-discharge rate at a 7.6 V voltage platform (mV/h) | Result of nail penetration test |
|---|---|---|---|---|---|---|---|---|---|---|---|---|---|---|
| Example 7 | PP | 15 | Separator | Separator | PP | $3 \times 10^{-4}$ | 0.020 | 2 | 589 | 18.0 | 27 | 4.2% | 0.05 | 8 out of 10 passed |
| Example 8 | PP | 50 | Al (positive electrode current collector) | Separator | PP | $3 \times 10^{-4}$ | 0.020 | 2 | 586 | 29.0 | 27 | 6.5% | 0.03 | 8 out of 10 passed |
| Example 9 | PP | 30 | Al (positive electrode current collector) | Al (positive electrode current collector) | PP | $3 \times 10^{-4}$ | 0.020 | 2 | 589 | 29.0 | 26 | 6.3% | 0.03 | 9 out of 10 passed |
| Example 10 | Ti metal foil | 30 | Al (positive electrode current collector) | Separator | PP | $3 \times 10^{-4}$ | 0.020 | 2 | 590 | 22.0 | 22 | 6.3% | 0.03 | 6 out of 10 passed |
| Example 11 | Ti metal foil | 30 | Al (positive electrode current collector) | Al (positive electrode current collector) | PP | $3 \times 10^{-4}$ | 0.020 | 2 | NG | 27.0 | 21 | - | - | - |

| | Ion insulating layer | Thickness of barrier (μm) | Finishing material of electrode assembly A | Finishing material of electrode assembly B | Encapsulating layer | Water vapor permeability of barrier (g/(day·m²·Pa)/3 mm) | Ratio of thickness of polymer layer in sealing zone to sealing width | Number of cells in series connection | 0.1C discharge energy density (Wh/L) | Sealing intensity of barrier and package bag (N/8 mm) | Temperature rise test (°C) | Thickness growth rate of battery cell at 65°C 90% RH after storage for 7 days (%) | Self-discharge rate at a 7.6 V voltage platform (mV/h) | Result of nail penetration test |
|---|---|---|---|---|---|---|---|---|---|---|---|---|---|---|
| Example 12 | PP | 30 | Separator | Separator | Anhydride modified PP | $8\times10^{-5}$ | 0.020 | 2 | 589 | 35.0 | 26 | 5.2% | 0.03 | 8 out of 10 passed |
| Example 13 | PP | 30 | Separator | Separator | PP | $3\times10^{-4}$ | 0.050 | 2 | 589 | 33.0 | 27 | 9.7% | 0.05 | 8 out of 10 passed |
| Example 14 | PP | 30 | Separator | Separator | PP | $3\times10^{-4}$ | 0.025 | 2 | 589 | 35.0 | 26 | 6.5% | 0.05 | 8 out of 10 passed |
| Example 15 | PP | 30 | Separator | Separator | PP | $3\times10^{-4}$ | 0.035 | 3 | 592 | 27.0 | 28 | 8.5% | 0.05 | 7 out of 10 passed |
| Example 16 | Ti metal foil | 30 | Separator | Separator | PP | $3\times10^{-4}$ | 0.035 | 3 | 592 | 27.0 | 28 | 8.5% | 0.05 | 7 out of 10 passed |
| Example 17 | Carbon film | 20 | Separator | Separator | PP | $3\times10^{-4}$ | 0.020 | 2 | 587 | 22 | 23 | 7.0% | 0.03 | 6 out of 10 passed |
| Example 18 | Graphene film | 20 | Separator | Separator | PP | $3\times10^{-4}$ | 0.020 | 2 | 584 | 25 | 22 | 6.4% | 0.03 | 7 out of 10 passed |
| Example 19 | PP | 30 | Separator | Separator | Polyphenylene ether (PPE) | $2.5\times10^{-4}$ | 0.020 | 2 | 588 | 19 | 26 | 6.9% | 0.03 | 8 out of 10 passed |
| Example 20 | PP | 30 | Separator | Separator | PP | $3\times10^{-4}$ | 0.020 | 2 | 587 | 29.0 | 27 | 7.2% | 0.03 | 8 out of 10 passed |
| Example 21 | PP | 30 | Separator | Separator | PP | $3\times10^{-4}$ | 0.010 | 2 | 588 | 16.0 | 27 | 4.8% | 0.03 | 7 out of 10 passed |
| Comparative Example 1 | - | - | Separator | Separator | - | - | - | 2 | 556 | - | 25 | 7.0% | 0.03 | 8 out of 10 passed |
| Comparative Example 2 | - | - | Separator | Separator | - | - | - | 2 | 549 | - | 22 | 6.4% | 0.03 | 7 out of 10 passed |
| Comparative Example 3 | - | - | Separator | Separator | - | - | - | 2 | 575 | - | 21 | 6.5% | 0.03 | 7 out of 10 passed |

| | Ion insulating layer | Thickness of barrier (μm) | Finishing material of electrode assembly A | Finishing material of electrode assembly B | Encapsulating layer | Water vapor permeability of barrier (g/(day·m²·Pa)/3 mm) | Ratio of thickness of polymer layer in sealing zone to sealing width | Number of cells in series connection | 0.1C discharge energy density (Wh/L) | Sealing intensity of barrier and package bag (N/8 mm) | Temperature rise test (°C) | Thickness growth rate of battery cell at 65°C_90% RH after storage for 7 days (%) | Self-discharge rate at a 7.6 V voltage platform (mV/h) | Result of nail penetration test |
|---|---|---|---|---|---|---|---|---|---|---|---|---|---|---|
| Comparative Example 4 | - | - | Separator | Separator | - | - | - | 2 | NG | - | - | - | - | - |
| Comparative Example 5 | - | - | - | - | - | - | - | 1 | 585 | 28 | 38 | 7.2% | 0.03 | 6 out of 10 passed |
| Comparative Example 6 | PP | 200 | Separator | Separator | PP | $3\times10^{-4}$ | 0.060 | 2 | 568 | 36.0 | 27 | 13.2% | 0.03 | 8 out of 10 passed |
| Comparative Example 7 | PP | 30 | Separator | Separator | PP | $3\times10^{-4}$ | 0.008 | 2 | 587 | 11.0 | 27 | 15.1% | 0.03 | 8 out of 10 passed |
| Comparative Example 8 | PP | 30 | Separator | Separator | PP | $3\times10^{-4}$ | 0.008 | 2 | 542 | 39.0 | 27 | 6.2% | 0.03 | 8 out of 10 passed |
| Comparative Example 9 | PP | 30 | Separator | Separator | PE | $1.7\times10^{-2}$ | 0.020 | 2 | 587 | 18.0 | 26 | 22.0% | 0.03 | 9 out of 10 passed |

1.NG: The target voltage platform could not be reached and measurement was unable to be performed. 2. The finishing materials of the electrode assembly A and the electrode assembly B are materials of which the electrode assembly A and the electrode assembly B are in contact with the barrier.

It can be seen from the foregoing Examples that the output voltage of the battery was increased through series connection according to this application, high energy density and high nail penetration pass rate were maintained, and the self-discharge rate was low. With the barrier of this application, the stability in a humid environment was significantly improved, and the battery of this application maintained a low thickness growth rate, indicating that the battery of the embodiments of this application can prevent water vapor from penetrating into the battery and prolong the service life of the battery. When the water vapor permeability of the barrier is too high, for example, exceeds the range defined in this application, the thickness growth rate of the battery increases significantly, indicating that the water resistance of the battery is reduced, which may affect the service life. When the water vapor permeability of the barrier is required to be low, requirements for materials are significantly increased, which will lead to a significant increase in manufacturing costs. When the ratio of the sealing thickness to the sealing width is lower than the lower limit of the range defined in this application, for example, the sealing width of the battery is excessively large, although the sealing intensity is increased, the energy density of the battery will be significantly reduced, and when the sealing thickness of the battery is excessively small, the sealing intensity is significantly reduced. When the ratio of the sealing thickness to the sealing width is higher than the upper limit of the range defined in this application, for example, when the sealing thickness is excessively large, the growth rate of the battery increases significantly. Without being limited to any theory, the applicant believes that excessive sealing thickness may cause water vapor to penetrate into the battery from the sealing zone, thereby reducing the water resistance of the battery.

The foregoing descriptions are merely preferred embodiments of the present invention, but are not intended to limit the present invention. Any modification, equivalent replacement, or improvement made without departing from the spirit and principle of the present invention shall fall within the protection scope of the present invention.

**Claims**

1. An electrochemical apparatus, comprising a barrier, wherein the barrier is hermetically connected to an outer package, standalone chambers are formed at two sides of the barrier respectively, each chamber encapsulates an electrode assembly and an electrolyte, electrode assemblies in adjacent chambers are connected in series by tabs, and the barrier comprises an ion insulating layer;

water permeability of the barrier is less than or equal to $10^{-3}$ g/(day·m$^2$·Pa)/3 mm; and
sealing thickness T and sealing width W of a seal between the barrier and the outer package satisfy $0.01 \leq T/W \leq 0.05$.

2. The electrochemical apparatus according to claim 1, wherein the ion insulating layer is made of at least one of a polymer material, a metal material, and a carbon material.

3. The electrochemical apparatus according to claim 2, wherein the polymer material comprises at least one of polyethylene terephthalate, polybutylene terephthalate, polyethylene naphthalate, polyether ether ketone, polyimide, polyamide, polyethylene glycol, polyamide imide amine, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate ester, poly(vinylidene fluoride-hexafluoropropylene), poly(vinylidene fluoride-cochlorotrifluoroethylene), silicone, vinylon, polypropylene, anhydride modified polypropylene, polyethylene, ethylene-acetic acid ethylene copolymer, ethylene-ethyl acrylate copolymer, ethylene-acrylic acid copolymer, ethylene-vinyl alcohol copolymer, polyvinyl chloride, polystyrene, polyether nitrile, polyurethane, polyphenylene ether, polyester, polysulfone, and non-crystalline $\alpha$-olefin copolymer and its derivatives;

the metal material comprises at least one of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel, and compositions or alloys thereof; and
the carbon material comprises at least one of carbon felt, carbon film, carbon black, acetylene black, fullerene, conductive graphite film, or graphene film.

4. The electrochemical apparatus according to claim 1, wherein the barrier further comprises an encapsulating layer, the encapsulating layer is disposed at a circumferential edge around a surface of the ion insulating layer or on the entire surface of the ion insulating layer, and a material of the encapsulating layer has a melting point ranging from 120°C to 160°C.

5. The electrochemical apparatus according to claim 4, wherein the encapsulating layer comprises at least one of polypropylene, acid anhydride modified polypropylene, polyethylene, ethylene-vinyl acetate copolymer, ethylene-ethyl acrylate copolymer, ethylene-acrylic acid copolymer, ethylene-vinyl alcohol copolymer, polyvinyl chloride, polystyrene, polyether nitrile, polyurethane, polyamide, polyester, and amorphous $\alpha$-olefin copolymer and its derivatives.

6. The electrochemical apparatus according to claim 1, wherein width of the barrier ranges from 6 $\mu$m to 100 $\mu$m.

7. The electrochemical apparatus according to claim 1, wherein the ion insulating layer is a single-layer or multi-layer structure.

8. The electrochemical apparatus according to claim 1, having at least one of the following characteristics:

(a) the water permeability of the barrier is less than or equal to $10^{-4}$ g/(day·m$^2$·Pa)/3 mm;
(b) thickness of the barrier ranges from 10 $\mu$m to 40 $\mu$m; and
(c) a material of the ion insulating layer has a melting point higher than or equal to 165°C.

9. The electrochemical apparatus according to claim 1, wherein a structure of the electrode assembly comprises a winding structure or a laminated structure.

10. An electronic apparatus, comprising the electrochemical apparatus according to any one of claims 1 to 9.

FIG. 1

FIG. 2

FIG. 3

FIG. 4

FIG. 5

FIG. 6

<div align="center">INTERNATIONAL SEARCH REPORT</div>

| International application No. |
|---|
| **PCT/CN2020/099509** |

**A. CLASSIFICATION OF SUBJECT MATTER**

H01M 50/289(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; CNABS; VEN; WOTXT; USTXT; EPTXT; CNKI: 电池, 隔板, 腔, 室, 电解液, 渗水率, 密封, 厚度, 宽度, battery, cell, separator, cavity, chamber, electrolyte, water permeability, seal, thickness, width

**C. DOCUMENTS CONSIDERED TO BE RELEVANT**

| Category* | Citation of document, with indication, where appropriate, of the relevant passages | Relevant to claim No. |
|---|---|---|
| Y | CN 105009353 B (SHENHUA GROUP CORPORATION LIMITED et al.) 03 May 2017 (2017-05-03) description, paragraphs 28-74, and figures 1-5 | 1-10 |
| Y | CN 203377299 U (DONGGUAN AMPEREX TECHNOLOGY LIMITED et al.) 01 January 2014 (2014-01-01) description, paragraphs [0019]-[0026], and figures 1-3 | 1-10 |
| Y | CN 104143652 A (SHENHUA GROUP CORPORATION LIMITED et al.) 12 November 2014 (2014-11-12) description paragraphs 28-67, figures 1a-4 | 1-10 |
| A | JP 2013200976 A (FUJI HEAVY INDUSTRIES LTD.) 03 October 2013 (2013-10-03) entire document | 1-10 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 March 2021** | **30 March 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/099509**

| Patent document cited in search report | | | Publication date (day/month/year) | Patent family member(s) | | | Publication date (day/month/year) |
|---|---|---|---|---|---|---|---|
| CN | 105009353 | B | 03 May 2017 | JP | 2016513855 | A | 16 May 2016 |
| | | | | CN | 105009353 | A | 28 October 2015 |
| | | | | US | 2016020481 | A1 | 21 January 2016 |
| | | | | US | 9979045 | B2 | 22 May 2018 |
| | | | | WO | 2014134783 | A1 | 12 September 2014 |
| | | | | JP | 6290936 | B2 | 07 March 2018 |
| CN | 203377299 | U | 01 January 2014 | None | | | |
| CN | 104143652 | A | 12 November 2014 | CN | 104143652 | B | 04 May 2016 |
| JP | 2013200976 | A | 03 October 2013 | JP | 5956798 | B2 | 27 July 2016 |

Form PCT/ISA/210 (patent family annex) (January 2015)